(19) Europäisches Patentamt
European Patent Office
Office européen des brevets

(11) **EP 3 003 803 B1**

(12) **EUROPÄISCHE PATENTSCHRIFT**

(45) Veröffentlichungstag und Bekanntmachung des Hinweises auf die Patenterteilung:
**30.10.2019 Patentblatt 2019/44**

(21) Anmeldenummer: **14724709.2**

(22) Anmeldetag: **13.05.2014**

(51) Int Cl.:
**B60T 8/32** *(2006.01)*　　　**B60T 13/68** *(2006.01)*
**B60T 13/74** *(2006.01)*

(86) Internationale Anmeldenummer:
**PCT/EP2014/059688**

(87) Internationale Veröffentlichungsnummer:
**WO 2014/195093 (11.12.2014 Gazette 2014/50)**

(54) **VERFAHREN ZUR REGELUNG EINES ELEKTROMECHANISCHEN AKTUATORS SOWIE REGELVORRICHTUNG**

METHOD FOR CONTROLLING AN ELECTROMECHANICAL ACTUATOR, AND CONTROL DEVICE

PROCÉDÉ PERMETTANT LE RÉGLAGE D'UN ACTIONNEUR ÉLECTROMÉCANIQUE ET DISPOSITIF DE RÉGLAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.06.2013 DE 102013210422**
**05.12.2013 DE 102013224967**

(43) Veröffentlichungstag der Anmeldung:
**13.04.2016 Patentblatt 2016/15**

(73) Patentinhaber: **Continental Teves AG & Co. OHG 60488 Frankfurt am Main (DE)**

(72) Erfinder: **BÖHM, Jürgen 65558 Oberneisen (DE)**

(56) Entgegenhaltungen:
**WO-A1-2011/154275　　WO-A1-2011/154369**

EP 3 003 803 B1

**Beschreibung**

Die Erfindung betrifft ein Verfahren gemäß dem Oberbegriff von Anspruch 1 sowie eine Regelvorrichtung gemäß dem Oberbegriff von Anspruch 11.

In der Kraftfahrzeugtechnik finden "Brake-by-wire"-Bremsanlagen eine immer größere Verbreitung. Hydraulische "Brake-by-wire"-Bremsanlagen umfassen oftmals neben einem durch den Fahrzeugführer betätigbaren Hauptbremszylinder eine elektrisch steuerbare Druckbereitstellungseinrichtung, mittels welcher in der Betriebsart "Brake-by-wire" eine Betätigung der Radbremsen, entweder direkt oder über den Hauptbremszylinder, stattfindet. Um dem Fahrzeugführer in der Betriebsart "Brake-by-wire" ein angenehmes Pedalgefühl zu vermitteln, umfassen die Bremsanlagen üblicherweise eine Bremspedalgefühl-Simulationseinrichtung, welche z.B. mit dem Hauptbremszylinder in Wirkverbindung steht. Zur Ansteuerung der Bremsanlage ist ein Sollwertgeber vorgesehen, welcher z.B. die elektrischen Signale von ein oder mehreren Sensoren zur Erfassung des Fahrerbremswunsches (Betätigungswunsches) auswertet, um einen Sollwert für die Ansteuerung der Druckbereitstellungseinrichtung zu bestimmen. Bei diesen Bremsanlagen kann die Druckbereitstellungseinrichtung jedoch auch ohne aktives Zutun des Fahrers aufgrund elektronischer Signale betätigt werden. Diese elektronischen Signale können beispielsweise von einem elektronischen Stabilitätsprogramm (ESC) oder einem Abstandsregelsystem (ACC) ausgegeben werden, so dass der Sollwertgeber einen Sollwert zur Ansteuerung der Druckbereitstellungseinrichtung anhand dieser Signale bestimmt.

In der WO 2011/154275 A1 ist ein Verfahren zur Regelung eines elektrohydraulischen Bremssystems für Kraftfahrzeuge mit einer elektronisch ansteuerbaren Druckbereitstellungseinrichtung, welche mit hydraulisch betätigbaren Radbremsen verbunden ist, beschrieben. Die Druckbereitstellungseinrichtung umfasst eine Zylinder-Kolben-Anordnung mit einem hydraulischen Druckraum, deren Kolben durch einen elektromechanischen Aktuator relativ zu einer Ruheposition verschiebbar ist. Zur Regelung werden ein Vordruck-Istwert und ein Vordruck-Sollwert bestimmt, die einer Reglervorrichtung als Eingangsgrößen zugeführt werden. Die Zylinder-Kolben-Anordnung wird von der Reglervorrichtung derart angesteuert, dass der Vordruck-Sollwert in dem hydraulischen Druckraum durch Verschiebung des Kolbens eingestellt wird.

Weiterhin sind "Brake-by-wire"-Bremsanlagen mit zumindest einer elektromechanisch betätigbaren Radbremse bekannt. So geht z.B. aus der EP 1 611 365 B1 eine Betätigungseinheit für eine elektromechanisch betätigbare Scheibenbremse für Kraftfahrzeuge hervor, die an einem Bremssattel angeordnet ist, in dem zwei mit je einer Seitenfläche einer Bremsscheibe zusammenwirkende Reibbeläge begrenzt verschiebbar angeordnet sind, wobei einer der Reibbeläge mittels eines Betätigungselementes durch die Betätigungseinheit direkt und der andere Reibbelag durch die Wirkung einer vom Bremssattel aufgebrachten Reaktionskraft mit der Bremsscheibe in Eingriff bringbar ist, wobei die Betätigungseinheit aus einem Elektromotor, einem wirkungsmäßig zwischen dem Elektromotor und dem Betätigungselement angeordneten ersten Untersetzungsgetriebe sowie einem zwischen dem Elektromotor und einem Teil des ersten Untersetzungsgetriebes angeordneten zweiten Untersetzungsgetriebe besteht, und wobei der Betätigungseinheit eine elektronische Steuereinheit zugeordnet ist, die der Ansteuerung des Elektromotors dient.

In der DE 10 2012 200 494 A1 wird ein Verfahren zur Regelung einer Bremsanlage mit einer durch einen elektromechanischen Aktuator antreibbaren hydraulischen Zylinder-Kolben-Anordnung als Druckbereitstellungseinrichtung beschrieben. Dabei wird abhängig von einem gemessenen Druck-Istwert und einem vorgegebenen Druck-Sollwert eine Stellgröße für den elektromechanischen Aktuator bestimmt. Bei Vorliegen bestimmter Bedingungen wird anstelle des gemessenen Druck-Istwerts ein berechneter Modell-Druck-Istwert bestimmt und die Stellgröße für den elektromechanischen Aktuator anhand des Modell-Druck-Istwerts und des vorgegebenen Druck-Sollwerts bestimmt. Der Modell-Druck-Istwert wird dabei gemäß einer vorgegebenen linearen Funktion aus der aktuellen Position der Druckbereitstellungseinrichtung berechnet. Die vorgegebene lineare Funktion wird also zur Berechnung eines alternativen Druck-Istwerts für die Regelung, anstelle des gemessenen Druck-Istwerts, herangezogen. Das Verfahren dient ausschließlich zur schnellen Überwindung, insbesondere von großen, Lüftspielen der an die Druckbereitstellungseinrichtung angeschlossenen Radbremse(n). Eine generelle Verbesserung der Genauigkeit des Regelverhaltens wird damit nicht erreicht.

In der WO 2011/154369 A1 wird ein Verfahren zur Regelung eines elektromechanischen Aktuators einer Bremsanlage beschrieben, wobei anhand des Sollwerts und des Istwerts der Regelgröße mittels eines Druckreglers ein erster Aktuatorgeschwindigkeit-Sollwert ermittelt wird, und anhand des ersten Aktuatorgeschwindigkeit-Sollwerts und eines zweiten Aktuatorgeschwindigkeit-Sollwerts zur Geschwindigkeitsvorsteuerung eine Stellgröße für den elektromechanischen Aktuator bestimmt wird. Dabei wird der Aktuatorgeschwindigkeit-Sollwert zur Geschwindigkeitsvorsteuerung aus dem Sollwert der Regelgröße durch Differentiation und Gewichtung mit einem Faktor bestimmt.

Es ist Aufgabe der vorliegenden Erfindung, ein Verfahren zur Regelung eines elektromechanischen Aktuators sowie eine Regelvorrichtung für einen elektromechanischen Aktuator bereitzustellen, das/die eine präzisere Einstellung von vorgegebenen Sollwerten einer Regelgröße bzw. (zeitlichen) Sollwertverläufen ermöglicht.

Diese Aufgabe wird erfindungsgemäß durch ein Verfahren gemäß Anspruch 1 sowie eine Regelvorrichtung gemäß Anspruch 11 gelöst.

Der Erfindung liegt der Gedanke zugrunde, anhand des Sollwerts und des Istwerts der Regelgröße einen ersten Aktuatorgeschwindigkeit-Sollwert zu ermitteln, anhand des Sollwerts der Regelgröße und eines vorgegebenen Zusammenhangs zwischen der Regelgröße und einer zu einer Position des elektromechanischen Aktuators korrespondierenden Größe einen zweiten Aktuatorgeschwindigkeit-Sollwert zu ermitteln und anhand des ersten und des zweiten Aktuatorgeschwindigkeit-Sollwerts die Stellgröße für den elektromechanischen Aktuator zu bestimmen. Der zweite Aktuatorgeschwindigkeit-Sollwert stellt somit eine verbesserte Geschwindigkeitsvorsteuerung dar.

Die Erfindung bietet den Vorteil einer situationsangepassten, und damit schnelleren und präziseren Einstellung der Sollwerte.

Unter einer Aktuatorposition wird erfindungsgemäß in Verallgemeinerung eine Position oder Lage oder Stellung des elektromechanischen Aktuators bzw. eines Teils des elektromechanischen Aktuators oder eine Position oder Lage oder Stellung einer von dem elektromechanischen Aktuator angetriebenen Komponente verstanden. Z.B. kann die Aktuatorposition ein Rotorlagewinkel eines Elektromotors oder eine Spindelposition eines Rotations-Translations-Getriebes sein. Im Falle eines durch den elektromechanischen Aktuator angetriebenen Kolbens einer Druckbereitstellungseinrichtung kann es sich bei der Aktuatorposition z.B. um eine Position des Kolbens handeln.

Unter einer zu einer Position des elektromechanischen Aktuators korrespondierenden Größe wird erfindungsgemäß eine Größe verstanden, welche mit einer Aktuatorposition eindeutig korreliert ist. Bei der zu einer Position des elektromechanischen Aktuators korrespondierenden Größe kann es sich um die Aktuatorposition selbst oder eine damit verknüpfte Größe handeln. Im Falle einer durch den elektromechanischen Aktuator angetriebenen Zylinder-Kolben-Anordnung kann es sich bei der korrespondierenden Größe z.B. um das Volumen des Druckraums der Druckbereitstellungseinrichtung handeln, das über den Durchmesser des Zylinders eindeutig mit der Aktuatorposition (bzw. Kolbenposition) verknüpft ist. Im genannten Falle kann der vorgegebene Zusammenhang zwischen der Regelgröße und der zu einer Position des elektromechanischen Aktuators korrespondierenden Größe z.B. durch eine Druck-Kolbenposition-Kennlinie oder Druck-Volumen-Kennlinie oder Druck-Rotorlagewinkel-Kennlinie gegeben sein.

Der erste Aktuatorgeschwindigkeit-Sollwert wird bevorzugt mittels eines ersten Reglers aus dem Sollwert und dem Istwert ermittelt.

Gemäß einer Weiterbildung der Erfindung wird anhand des ersten und des zweiten Aktuatorgeschwindigkeit-Sollwerts ein dritter Aktuatorgeschwindigkeit-Sollwert bestimmt. Dieser wird vorteilhafterweise als Eingangsgröße einem zweiten Regler zugeführt. Bei dem zweiten Regler handelt es sich besonders bevorzugt um einen Geschwindigkeitsregler. Der dritte Aktuatorgeschwindigkeit-Sollwert wird der Einfachheit wegen besonders bevorzugt durch Addition des ersten und des zweiten Aktuatorgeschwindigkeit-Sollwerts gebildet.

Der zweite Regler liefert als Ausgangsgröße bevorzugt einen Drehmoment-Sollwert als Stellgröße für den elektromechanischen Aktuator.

Gemäß einer bevorzugten Ausführungsform des erfindungsgemäßen Verfahrens wird aus dem Sollwert mittels des vorgegebenen Zusammenhangs ein Aktuatorposition-Sollwert ermittelt.

Weiterhin wird bevorzugt aus dem Aktuatorposition-Sollwert der zweite Aktuatorgeschwindigkeit-Sollwert ermittelt. Hiermit kann dann eine Geschwindigkeitsvorsteuerung durchgeführt werden.

Zur Verbesserung der Qualität des ermittelten Aktuatorposition-Sollwerts wird der Sollwert bevorzugt gefiltert und der gefilterte Sollwert zur Ermittlung des Aktuatorposition-Sollwerts herangezogen.

Bevorzugt wird eine Anstiegsbegrenzung des ermittelten Aktuatorposition-Sollwerts durchgeführt. Besonders bevorzugt wird hierzu eine Änderung des Aktuatorposition-Sollwerts auf eine maximale Positionsänderung pro einem Abtastschritt des ersten Reglers begrenzt.

Anhand des begrenzten Aktuatorposition-Sollwerts oder anhand der begrenzten Änderung des Aktuatorposition-Sollwerts wird bevorzugt eine erste Aktuatorgeschwindigkeit ermittelt. Die erste Aktuatorgeschwindigkeit kann einfach durch Differentiation des begrenzten Aktuatorposition-Sollwerts bestimmt werden. Die erste Aktuatorgeschwindigkeit kann ebenso einfach aus den begrenzten Änderungen des Aktuatorposition-Sollwerts bestimmt werden, da die Abtastzeitpunkte der Reglerloop bekannt sind.

Zur Adaption der Regelung wird bevorzugt eine Gewichtung der Geschwindigkeitsvorsteuerung dadurch durchgeführt, dass die erste Aktuatorgeschwindigkeit durch Multiplikation mit einem Skalierungsfaktor gewichtet wird.

Gemäß einer bevorzugten Weiterbildung der Erfindung wird eine Geschwindigkeitsbegrenzung der ersten Aktuatorgeschwindigkeit durchgeführt. Diese wird vorteilhafterweise in Abhängigkeit der Drehrichtung des Aktuators durchgeführt, so dass für den Fall eines Druck-/Kraftaufbaus große Werte für die Geschwindigkeitsvorsteuerung zugelassen werden können, z.B. zur Unterstützung der schnellen Lüftspielüberwindung, während für einen Druck-/Kraftabbau kleinere Werte ausreichend sind.

Der zweite Aktuatorgeschwindigkeit-Sollwert wird bevorzugt anhand des begrenzten Aktuatorposition-Sollwerts oder der begrenzten Änderung des Aktuatorposition-Sollwerts oder der ersten Aktuatorgeschwindigkeit ermittelt.

Die Erfindung betrifft auch eine Regelvorrichtung.

Bevorzugt umfasst die Regelvorrichtung Mittel, mittels welcher ein erfindungsgemäßes Verfahren durchgeführt wird.

Gemäß einer bevorzugten Ausführungsform der erfindungsgemäßen Regelvorrichtung gibt der erste Regler den ersten Aktuatorgeschwindigkeit-Sollwert aus und dem zweiten Regler werden als Eingangsgrößen der dritte Aktuatorgeschwindigkeit-Sollwert und ein Aktuatorgeschwindigkeit-Istwert zugeführt.

Der zweite Regler gibt bevorzugt einen Aktuatormoment-Sollwert aus, aus welchem ein zweiter Aktuatormoment-Sollwert zur Ansteuerung des Aktuators bestimmt wird. Der zweite Aktuatormoment-Sollwert wird besonders bevorzugt unter Berücksichtigung von vorgegebenen minimalen und maximalen Momentengrenzwerten bestimmt.

Die Regelvorrichtung umfasst bevorzugt ein Mittel zur Berechnung eines Aktuatorposition-Sollwerts aus dem Sollwert mittels des vorgegebenen Zusammenhangs. Dabei wird besonders bevorzugt der Sollwert mittels eines Filters gefiltert, bevor der Sollwert zur Berechnung des Aktuatorposition-Sollwerts herangezogen wird. Es handelt sich vorteilhafterweise um einen Tiefpassfilter.

Ebenso ist es bevorzugt, dass ein Mittel zur Bestimmung des zweiten Aktuatorgeschwindigkeit-Sollwerts aus dem Aktuatorposition-Sollwert vorgesehen ist.

Bevorzugt ist ein Mittel zur Anstiegsbegrenzung des ermittelten Aktuatorposition-Sollwerts vorgesehen. Besonders bevorzugt ist ein Mittel zur Begrenzung einer Änderung des Aktuatorposition-Sollwerts auf eine maximale Positionsänderung pro Abtastschritt bzw. Abtastzeit vorgesehen.

Weiter ist bevorzugt ein Mittel zur Berechnung einer ersten Aktuatorgeschwindigkeit aus dem begrenzten Aktuatorposition-Sollwert oder aus der begrenzten Änderung des Aktuatorposition-Sollwerts im der erfindungsgemäßen Regelvorrichtung vorgesehen.

Zusätzlich ist gemäß einer Weiterbildung der erfindungsgemäßen Regelvorrichtung ein Mittel zur Multiplikation der ersten Aktuatorgeschwindigkeit mit einem Skalierungsfaktor und/oder ein Mittel zur Begrenzung der ersten Aktuatorgeschwindigkeit vorgesehen.

Das erfindungsgemäße Verfahren bzw. die erfindungsgemäße Regelvorrichtung wird bevorzugt zur Regelung eines elektromechanischen Aktuators einer elektromechanisch betätigbaren Radbremse eingesetzt.

Alternativ ist es bevorzugt, das erfindungsgemäße Verfahren bzw. die erfindungsgemäße Regelvorrichtung zur Regelung eines elektromechanischen Aktuators einer Bremsanlage mit zumindest einer hydraulisch betätigbaren Radbremse einzusetzen. Besonders bevorzugt wird das erfindungsgemäße Verfahren bzw. die erfindungsgemäße Regelvorrichtung zur Regelung eines elektromechanischen Aktuators einer Druckbereitstellungseinrichtung eingesetzt. Vorteilhafterweise handelt es sich um eine Druckbereitstellungseinrichtung, welche eine Zylinder-Kolben-Anordnung mit einem hydraulischen Druckraum umfasst, deren Kolben durch den elektromechanischen Aktuator verschiebbar ist.

Zwischen einer, insbesondere jeder, Radbremse und dem zugehörigen Druckraum ist bevorzugt ein elektrisch ansteuerbares Einlassventil angeordnet, mit welchem die Radbremse von dem Druckraum hydraulisch abtrennbar ist.

Bevorzugt ist eine, insbesondere jede, Radbremse über ein elektrisch ansteuerbares Auslassventil mit einem Druckmittelvorratsbehälter verbindbar.

Weitere bevorzugte Ausführungsformen der Erfindung ergeben sich aus den Unteransprüchen und der nachfolgenden Beschreibung anhand von Figuren.

Es zeigen schematisch:

Fig. 1    ein Prinzipschaltbild eines elektrohydraulischen Bremssystems zur Durchführung eines erfindungsgemäßen Verfahrens,

Fig. 2    ein Blockschaltbild einer Grundstruktur einer Regelvorrichtung,

Fig. 3    einen beispielhaften Zusammenhang zwischen einer Regelgröße und einer Position des elektromechanischen Aktuators, und

Fig. 4    einen Ausschnitt einer beispielsgemäßen Regelvorrichtung.

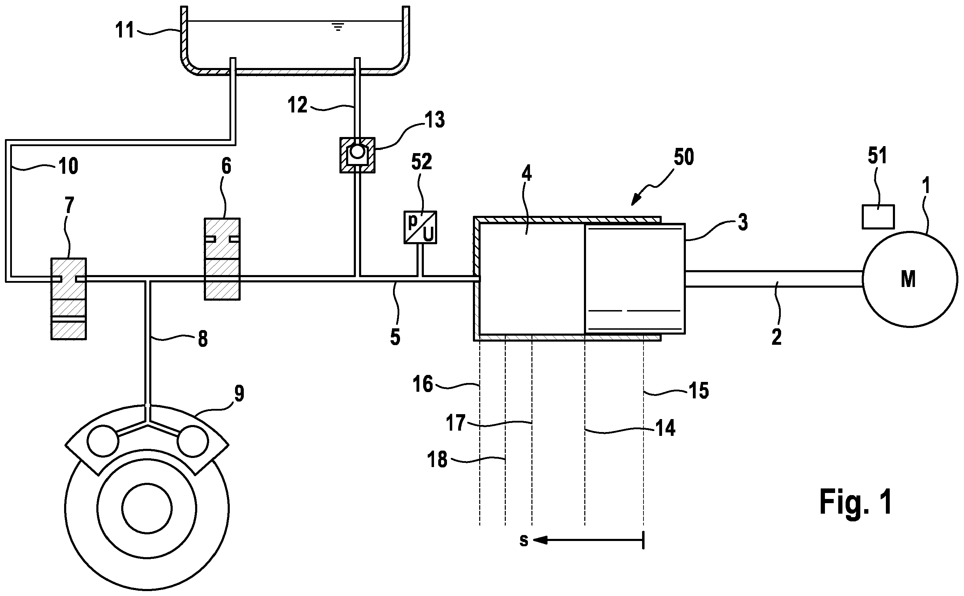

In Fig. 1 ist ein Prinzipschaltbild einer beispielsgemäßen hydraulischen Bremsanlage für Kraftfahrzeuge zur Durchführung eines erfindungsgemäßen Verfahrens schematisch dargestellt. Die Bremsanlage umfasst ein nicht dargestelltes Bremspedal und eine elektronisch ansteuerbare Druckbereitstellungseinrichtung 50, mittels welcher ein Druck zur Betätigung zumindest einer hydraulisch betätigbaren Radbremse 9 erzeugt werden kann. Die Betätigung des Bremspedals bzw. der Fahrerbremswunsch wird, z.B. mittels eines geeigneten Sensors, erfasst und die Druckbereitstellungseinrichtung 50 entsprechend der erfassten Betätigung elektronisch angesteuert. Beispielsgemäß wird die Druckbereitstellungseinrichtung 50 durch eine Zylinder-Kolben-Anordnung mit einem hydraulischen Druckraum 4 und einem Tauchkolben 3 gebildet. Mittels eines elektromechanischen Aktuators, z.B. eines Elektromotors 1 mit einem geeigneten Getriebe 2, ist der Tauchkolben 3 verschiebbar, so dass ein Druck in dem hydraulischen Druckraum 4 einstellbar ist. Getriebe 2 ist vorteilhafterweise als ein Rotations-Translations-Getriebe, z.B. ein Kugelgewindetrieb, ausgeführt. Die Radbremse 9 ist bevorzugt über eine Leitung 8, 5 mit dem Druckraum 4 der Druckbereitstellungseinrichtung 50 hydraulisch verbindbar oder verbunden. Alternativ ist es denkbar, dass die Radbremse (n) über eine Leitung mit einem (Ausgangs)Druckraum eines Hauptbremszylinders oder einer Trennkolben-Anordnung hydraulisch verbindbar oder verbunden ist, wobei ein Kolben des Hauptbremszylinders oder der Trennkolben-Anordnung über einen (Eingangs)Druckraum / Zwischenraum durch die Druckbereitstellungseinrichtung betätigbar ist (nicht dargestellt, siehe z.B. WO 2008/025797 A1 oder DE 10 2009 054 985.4). In allen Fällen wird eine Druckanforderung $P_{Sys,Soll}$ (z.B. durch den Fahrer oder eine Bremsregelfunktion oder ein Fahrerassistenzsystem) elektronisch mit Hilfe der elektronisch ansteuerbaren Druckbereitstellungseinrichtung 50 in einen Systemdruck $P_{Sys}$ zur Beaufschlagung der Radbremse bzw. üblicherweise der Radbremsen 9 umgesetzt. Um eine schnelle und präzise Druckeinstellung an der oder den Radbremsen 9 zu erreichen, ist/sind die Radbremse(n) 9 über eine Leitung mit dem Druckraum 4 der Druckbereitstellungseinrichtung 50 hydraulisch verbindbar.

Weiterhin umfasst die beispielsgemäße Bremsanlage der Fig. 1 zur Bremsdruckmodulation an der Radbremse 9 ein in der Leitung 5 angeordnetes Einlassventil 6 sowie ein Auslassventil 7, wobei die Radbremse 9 über das Auslassventil 7 im Falle eines gewünschten Radbremsdruckabbaus mit einem Druckmittelvorratsbehälter 11 verbunden werden kann. Der Druckraum 4 der Druckbereitstellungseinrichtung 50 ist zum Nachsaugen von Druckmittel aus dem Druckmittelvorratsbehälter 11 in den Druckraum 4 über eine Verbindungsleitung 12 mit einem in Richtung des Druckmittelvorratsbehälters 11 schließenden Rückschlagventil 13 mit dem Druckmittelvorratsbehälter 11 verbunden.

Indem bei einer Bremsung der Kolben 3 der Druckbereitstellungseinrichtung 50 mittels des Elektromotors 1 um einen Weg S aus seiner Ruheposition 15 in eine Position 14 verschoben wird, wird ein bestimmtes Volumen von Druckmittel aus dem Druckraum 4 über die Leitung 5 und das zunächst geöffnete Einlassventil 6 in den Radbremskreis 8 und somit in die Radbremse 9 verschoben. Damit wird in der Radbremse 9 nach Überwindung des Belaglüftspiels ein Bremsdruck erzeugt.

Ein Bremsdruckabbau kann erfolgen, indem der Kolben 3 wieder in Richtung der Ruheposition 15 zurückgefahren wird. Ein schneller Bremsdruckabbau, wie er z.B. im Falle einer Anti-Blockier-Regelung (ABS: Anti-Blockier-System) benötigt wird, ist aber auch über die Ventilkombination 6, 7 möglich, indem das Einlassventil 6 geschlossen und das Auslassventil 7 für eine bestimmte Zeit geöffnet wird. Dann strömt Druckmittel aus der Radbremse 9 über Leitung 8 durch das Auslassventil 7 und die Leitung 10 in den Druckmittelvorratsbehälter 11. Diese Maßnahme des Druckabbaus ist insbesondere dann sinnvoll, wenn der Druckraum 4 mit mehreren Radbremsen 9 verbunden ist, deren Bremsdruck radindividuell geregelt werden soll.

Grundsätzlich kann die in Fig. 1 dargestellte Bremsanlage um beliebig viele Radbremsen 9 erweitert werden, indem weitere Leitungen 5 zu Radbremskreisen 8 geführt werden, wobei jede Radbremse 9 bevorzugt über ein individuelles Ventilpaar aus Einlassventil 6 und Auslassventil 7 verfügt. Um aus Sicherheitsgründen eine Mehrkreisigkeit der Bremsanlage bereitzustellen, kann die Druckbereitstellungseinrichtung auch zwei oder mehr Kolben 3 und zwei oder mehr Druckräume 4 umfassen. Für einen Personenkraftwagen ist eine Zweikreisigkeit sinnvoll, wobei jeweils zwei Radbremsen 9 mit einer von zwei Druckkammern 4 verbunden sind. Ebenfalls sind alternative Ausführungsformen bei der Ausgestaltung der Druckregelventile denkbar.

Die beispielsgemäße Bremsanlage der Fig. 1 umfasst vorteilhafterweise eine Messeinrichtung in Form eines Drucksensors 52 zur Erfassung des (System)Drucks $P_{Sys}$ der Druckbereitstellungseinrichtung 50. Der durch die Messeinrichtung 52 erfasste Druck-Istwert wird im Weiteren mit $P_{Sys,Ist}$ bezeichnet.

Außerdem ist beispielsgemäß eine Messeinrichtung 51 vorgesehen, mittels welcher eine Position der Druckbereitstellungseinrichtung 50 bzw. des elektromechanischen Aktuators erfasst wird, welche für eine Position oder Lage oder Stellung des Aktuators 1 und damit des Kolbens 3 der Druckbereitstellungseinrichtung 50 charakteristisch ist. Messeinrichtung 51 kann z.B. einen Rotorlagewinkel des Elektromotors 1 oder eine Spindelposition eines Rotations-Translations-Getriebes oder auch den Weg S des Kolbens 3 aus seiner Ruheposition 15 erfassen. Alternativ kann die Position der Druckbereitstellungseinrichtung 50 auch aus anderen Größen, z.B. anhand eines Modells, bestimmt werden. Die entsprechende, direkt oder indirekt bestimmte Position des elektromechanischen Aktuators (und damit der Druckbereitstellungseinrichtung 50) wird im Weiteren mit $X_{Akt}$ bezeichnet.

Aus Gründen der Sicherheit und der schnellen Fehlererkennung wird/werden die Messgröße $X_{Akt}$ und/oder die Messgröße $P_{Sys}$ vorteilhafterwiese redundant ermittelt. Dazu kann der entsprechende Sensor 51, 52 eigensicher ausgeführt sein oder es können entsprechend zwei redundante Sensoren vorhanden sein.

Außerdem umfasst die Bremsanlage bevorzugt eine elektronische Steuer- und Regeleinheit, welcher die Aktuatorposition $X_{Akt}$, der gemessene Druck-Istwert $P_{Sys,Ist}$ und der Druck-Sollwert $P_{Sys,Soll}$ zugeführt werden und in welcher eine Stellgröße zur Ansteuerung des Aktuators 1 gebildet wird.

Die Notwendigkeit, einen vorgegebenen Systemdruck bzw. (zeitlichen) Systemdruckverlauf $P_{Sys,Soll}$ mit Hilfe eines Regelverfahrens einzustellen, ergibt sich immer dann, wenn der Fahrer mittels Betätigung des Bremspedals einen allgemeinen Bremsdruck für die Radbremsen des Kraftfahrzeugs anfordert. Neben der Fahreranforderung kann eine Druckanforderung auch durch eine Assistenzfunktion (wie z.B. ACC (adaptive cruise control), HSA (hill start assist), HDC (hill descent control) etc.) gestellt werden oder wenn eine spezielle radindividuelle Bremsenregelfunktion aktiv wird, wie beispielsweise ABS (Antiblockiersystem), TCS (Traction Control System) oder ESP (Elektronisches Stabilitätsprogramm).

Die Assistenzfunktionen fordern zumeist einen globalen Bremsdruck für alle Radbremsen 9 an, ähnlich wie der Fahrer mit Hilfe der mit dem Bremspedal ausgelösten Grundbremsung. In diesen Fällen wird der Druck bei geöffneten Einlassventilen 6 an allen Radbremskreisen 8 gleichermaßen durch Vorfahren des Kolbens 3 erzeugt.

Bezüglich der Dynamik des einzustellenden Systemdruckes bzw. Druckverlaufes gilt, dass im Rahmen der verfügbaren Dynamik des Aktuators 1, 2 ein möglichst geringer zeitlicher Verzug zwischen der gestellten Druckanforderung $P_{Sys,Soll}$ und dem sich einstellenden (System) Druck $P_{Sys,Ist}$ im Druckraum 4 anzustreben ist. Dies gilt insbesondere auch dann, wenn der Aktuator 1, 2 sich zu Beginn der Druckanforderung in seiner Ruheposition 15 befindet und daher zum Einstellen des geforderten Druckes zunächst das Belaglüftspiel der Radbremsen 9 überwinden muss. Dabei verschiebt der Aktuator zunächst ein, von der Größe der eingesetzten Radbremsen 9 und des eingestellten Belaglüftspiels abhängiges, Druckmittelvolumen aus dem Druckraum 4 in die Radbremsen 9, um die Beläge an die Bremsscheibe anzulegen. Während dieses Vorgangs wird allerdings noch kein Bremsdruck in den Radbremsen 9 aufgebaut.

Die obigen Ausführungen sind auch auf einen elektromechanischen Aktuator zur Betätigung einer elektromechanischen Radbremse übertragbar. Bei einer elektromechanisch betätigbaren Radbremse umfasst der elektromechanischen Aktuator beispielsgemäß einen Elektromotor, ein Rotations-Rotations-Getriebe sowie ein Rotations-Translations-Getriebe. Durch den elektromechanischen Aktuator wird ein Betätigungselement, z.B. Kolben, gegen einen der Reibbeläge gedrückt, so dass nach Überwindung des Belaglüftspiels die Reibbeläge gegen das abzubremsende Element, z.B. die Bremsscheibe, gedrückt werden und eine Zuspannkraft F ausüben. Anstelle des oben genannten (System) Drucks $P_{Sys,Soll}$ für die Druckbereitstellungseinrichtung der elektrohydraulischen Bremsanlage ist dann für jede elektromechanische Radbremse eine Soll-Kraft bzw. Soll-Zuspannkraft $F_{Soll}$ vorgegeben bzw. ein (zeitlicher) Soll-Kraftverlauf. Auch hier ist ein möglichst geringer zeitlicher Verzug zwischen der gestellten (Zuspann)Kraftanforderung $F_{Soll}$ und der sich einstellenden (Zuspann)Kraft $F_{Ist}$ an der Radbremse anzustreben. Der Kraft-Istwert $F_{Ist}$ der Radbremse kann gemessen werden (z.B. mittels eines Kraftsensor) oder auch anders, z.B. anhand eines Modells, bestimmt werden.

Die Erfindung betrifft daher ein Verfahren zur Regelung eines elektromechanischen Aktuators einer Bremsanlage für Kraftfahrzeuge, bei welchem ein Istwert einer Regelgröße, z.B. ein (System) Druck-Istwert $P_{Sys,Ist}$ oder ein (Zuspann)Kraft-Istwert $F_{Ist}$, auf einen vorgegebenen Sollwert, z.B. einen (System)Druck-Sollwert $P_{Sys,Soll}$ oder (Zuspann)Kraft-Sollwert $F_{Soll}$, eingestellt werden soll.

Im Folgenden wird die Erfindung exemplarisch anhand der Regelgröße (System)Druck näher beschrieben. Eine Übertragung auf die Regelgröße (Zuspann)Kraft ist einfach möglich.

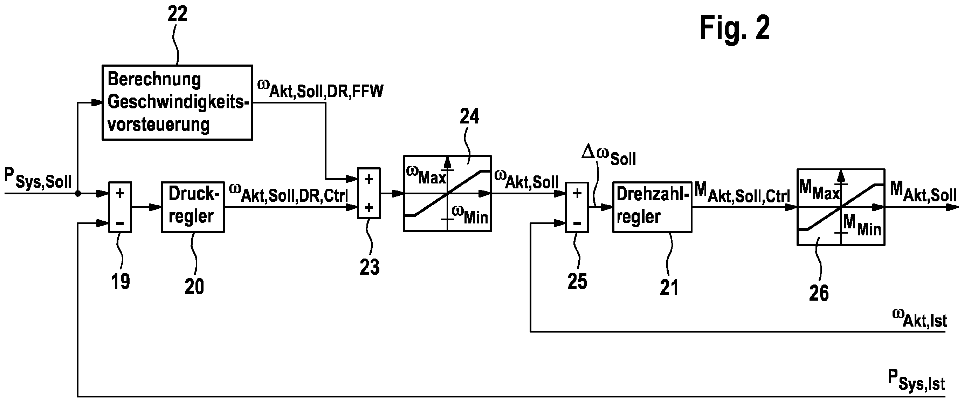

In Fig. 2 ist ein Blockschaltbild einer Grundstruktur einer Regelvorrichtung dargestellt, wie sie aus der DE 10 2012 200 494 A1 an sich bekannt ist, und zum Einstellen eines geforderten Systemdrucks bzw. Druckverlaufs $P_{Sys,Soll}$ geeignet ist.

Es handelt sich um einen Druckregler 20, dem ein Aktuatordrehzahlregler (Geschwindigkeitsregler) 21 unter Zwischenschaltung weiterer Schaltungselemente 23 bis 25 unterlagert ist. Dabei wird dem Druckregler 20 das Ergebnis einer in einem Subtraktionsglied 19 durchgeführten Subtraktion bzw. die Abweichung $\Delta P_{Sys}$ zwischen dem geforderten Druck-Sollwert $P_{Sys,Soll}$ und dem gegenwärtig vorliegenden Druck-Istwert $P_{Sys,Ist}$ zugeführt. Der Druckregler 20 regelt die Abweichung $\Delta P_{Sys}$ durch Vorgabe einer Solldrehzahl $\omega_{Akt,Soll,DR,Ctrl}$ ein, d.h. die Ausgangsgröße des Druckreglers 20 ist ein erster Sollwert $\omega_{Akt,Soll,DR,Ctrl}$ für die Aktuatorgeschwindigkeit (Aktuatordrehzahl). Der Wert für den Solldruck $P_{Sys,Soll}$ wird von einer übergeordneten Steuerung oder Regelung vorgegeben (nicht dargestellt). Der Druck-Istwert $P_{Sys,Ist}$ entspricht dem im Druckraum 4 der in Fig. 1 gezeigten Druckbereitstellungseinrichtung 50 erzeugten Druckwert. Der Druck-Istwert $P_{Sys,Ist}$ wird z.B. mittels des Drucksensors 52 gemessen. Als Reglerübertragungsverhalten ist üblicherweise ein proportional wirkender Regler (P-Regler) ausreichend.

Zur Erhöhung der Druckreglerdynamik ist eine Geschwindigkeitsvorsteuerung vorgesehen. Ein Geschwindigkeitsvorsteuerungsberechnungsmodul 22 bestimmt aus dem Druck-Sollwert $P_{Sys,Soll}$ durch Differentiation, z.B. mittels eines differenzierenden Filters, und Gewichtung mit einem Verstärkungsfaktor einen zusätzlichen Anteil $\omega_{Akt,Soll,DR,FFW}$ (zweiten Aktuatorgeschwindigkeit-Sollwert) zu der Solldrehzahl des (Druck) Reglers $\omega_{Akt,Soll,DR,Ctrl}$ (ersten Aktuatorgeschwindigkeit-Sollwert). In Additionsglied 23 wird die Summe der beiden Aktuatordrehzahl-Sollwertanteile $\omega_{Akt,Soll,DR,FFW}$ und $\omega_{Akt,Soll,DR,Ctrl}$ gebildet. Diese Summe wird einer Begrenzungsfunktion 24 zur Begrenzung auf eine minimal bzw. maximal zulässige Solldrehzahl ($\omega_{Min}$, $\omega_{Max}$) zugeführt. Z.B. können die maximal zulässigen Solldrehzahlen ($\omega_{Min}$, $\omega_{Max}$) betragsmäßig gleich groß sein.

In Verallgemeinerung werden auch die Komponenten 19, 20, 22, 23 und 24 kurz als Druckregler bzw. Druckregelvorrichtung 20 bezeichnet.

Die Ausgangsgröße ist ein dritter Sollwert für die Aktuatorgeschwindigkeit (z.B. Motordrehzahl) $\omega_{Akt,Soll}$, der dem Drehzahlregler 21 als Eingangsgröße zugeführt wird. Weitere Eingangsgröße des Drehzahlreglers 21, der üblicherweise proportional-integrierendes (PI-) Verhalten aufweist, ist die Istdrehzahl $\omega_{Akt,Ist}$ des Aktuators, die üblicherweise aus der zu Kommutierungszwecken meßtechnisch verfügbaren Aktuatorposition $X_{Akt}$ ermittelt wird. Beispielsgemäß wird der begrenzte Aktuatordrehzahl-Sollwert $\omega_{Akt,Soll}$ in einem weiteren Subtraktionsglied 25 zur Bildung einer Aktuatordrehzahl-Sollwertdifferenz $\Delta\omega_{Soll}$ mit dem Aktuatordrehzahl-Istwert $\omega_{Akt}$ verglichen. Die Aktuatordrehzahl-Sollwertdifferenz $\Delta\omega_{Soll}$ wird dem Drehzahlregler 21 als Eingangsgröße zugeführt, dessen Ausgangsgröße einem Sollwert $M_{Akt,Soll,Ctrl}$ des vom Aktuator aufgebrachten Drehmoments entspricht. Der Drehmoment-Sollwert $M_{Akt,Soll,Ctrl}$ wird schließlich in einem zweiten Begrenzungsmodul 26 auf einen minimal bzw. maximal zulässigen Momentenwert begrenzt und das Ergebnis $M_{Akt,Soll}$ an die Ansteuerelektronik des Aktuators weitergeleitet.

Im Falle eines elektromechanischen Aktuators einer elektromechanisch betätigbaren Bremse wird in Fig. 2 die (Zuspann) Kraft F anstelle des Druckes $P_{Sys}$ verwendet und der Druckregler 20 durch einen entsprechenden Kraftregler ersetzt.

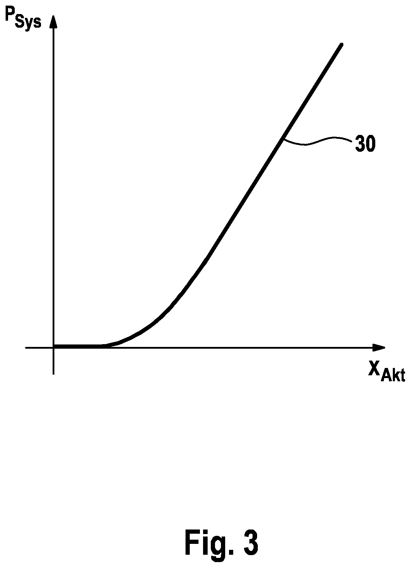

Fig. 3 zeigt schematisch einen beispielhaften Zusammenhang zwischen einer Regelgröße und einer Position des elektromechanischen Aktuators. Dargestellt ist eine beispielhafte statische Kennlinie 30 für den Zusammenhang zwischen dem Druck $P_{Sys}$ in Druckraum 4 und der Aktuatorposition $X_{Akt}$, die auch dem in Fig. 1 dargestellten Kolbenweg S entspricht. Aufgrund der Nichtlinearität der Kennlinie 30 sind die Stellgrößen des in Fig. 2 dargestellten Druckreglers, insbesondere im Bereich kleiner Drücke bzw. Druckanforderungen bis hin zu Drücken, die dem Teilbremsbereich entsprechen, kleiner als aufgrund der Kennlinie erforderlich. Die in Fig. 2 gezeigte Geschwindigkeitsvorsteuerung 22, die die Änderung des Solldruckes auswertet und als Solldrehzahlkomponente aufschaltet, berücksichtigt nicht, dass zur Einstellung eines geforderten Druckverlaufes im unteren Druckbereich, also dem nichtlinearen Teil der Kennlinie, eine im Vergleich zum höheren Druckbereich, in dem die in Fig. 3 gezeigte Bremsenkennlinie wesentlich steiler und näherungsweise linear verläuft, wesentlich größere und damit schnellere Änderung der Aktuatorposition $X_{Akt}$ erforderlich ist. Dieses Verhalten wird auch dann signifikant, wenn zur Reduzierung des Restbremsmomentes bei gelöster Radbremse ein relativ großes Belaglüftspiel eingestellt ist.

Im Falle eines elektromechanischen Aktuators einer elektromechanisch betätigbaren Bremse ist eine, der Kennlinie 30 entsprechende, z.B. nicht-lineare, Kennlinie 40 angebbar, welche z.B. einen Zusammenhang zwischen der (Zuspann)Kraft F und der Aktuatorposition $X_{Akt}$ beschreibt.

Zur Behebung der oben beschriebenen Problematik wird beispielsgemäß ein Verfahren zur Regelung des elektromechanischen Aktuators vorgeschlagen, in welchem aus dem Sollwert der Regelgröße, beispielsgemäß dem Druck-Sollwert $P_{Sys,Soll}$, mittels eines vorgegebenen Zusammenhangs zwischen der Regelgröße und der Aktuator-Position (bzw. einer zu der Aktuator-Position korrespondierenden Größe, z.B. einem Druckmittelvolumen) ein zweiter Aktuatorgeschwindigkeit-Sollwert zur Geschwindigkeitsvorsteuerung ermittelt wird. Aus dem Sollwert der Regelgröße wird vorteilhafterweise mittels des vorgegebenen Zusammenhangs zwischen der Regelgröße und der Aktuator-Position (bzw. einer zu der Aktuator-Position korrespondierenden Größe) ein Aktuatorposition-Sollwert $X_{Akt,Soll}$ bestimmt, welcher dann zur Bestimmung der Stellgröße für den elektromechanischen Aktuator herangezogen wird. Beispielsgemäß wird aus dem ermittelten Aktuatorposition-Sollwert $X_{Akt,Soll}$ der zweite Aktuatorgeschwindigkeit-Sollwert $\omega_{Akt,Soll,DR,FFW,1}$ ermittelt, der dann zur Geschwindigkeitsvorsteuerung benutzt wird.

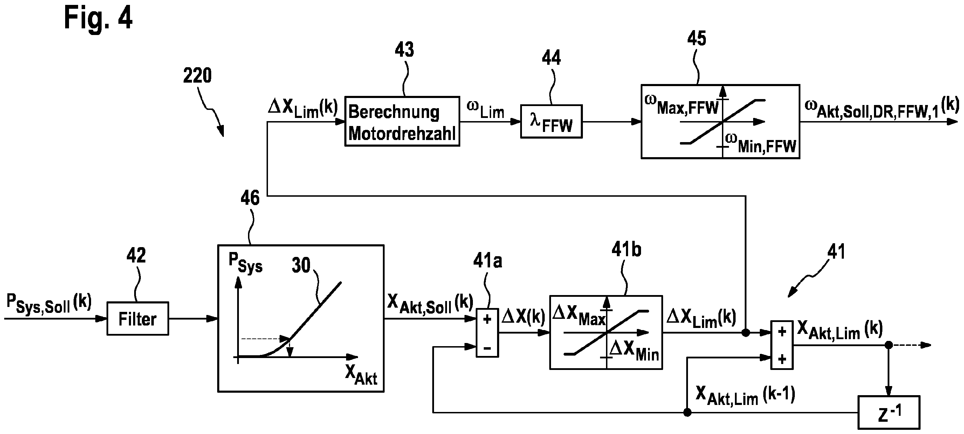

Eine beispielsgemäße Reglerstruktur zur Behebung der oben beschriebenen Problematik wird anhand von Fig. 4 erläutert, welche einen Ausschnitt einer beispielsgemäßen Regelvorrichtung zeigt. In Fig. 4 ist ein beispielsgemäßer Funktionsblock 220 "Berechnung der Geschwindigkeitsvorsteuerung" dargestellt, welcher den bekannten Funktionsblock 22 der Fig. 2 ersetzt. Gemäß Funktionsblock 220 wird die vorgesteuerte Aktuatorgeschwindigkeit (d.h. der zweite Aktuatorgeschwindigkeit-Sollwert) nicht mehr aus der mit einem Faktor gewichteten Solldruckänderung bestimmt (wie in Block 22), sondern aus einem aus dem Druck-Sollwert $P_{Sys,Soll}$ ermittelten Aktuatorposition-Sollwert $X_{Akt,Soll}$, bei dessen Bestimmung die die Bremsanlage charakterisierende Kennlinie 30 für den Zusammenhang zwischen dem Druck $P_{Sys}$ in Druckraum 4 und der Aktuatorposition $X_{Akt}$ berücksichtigt wird. Die vorgesteuerte Aktuatorgeschwindigkeit entspricht somit im Wesentlichen dem zur Einhaltung des Solldruckgradienten erforderlichen Volumenstrom und damit der daraus resultierenden Aktuatordrehzahl.

Das beispielsgemäße Verfahren bzw. die beispielsgemäße Regelvorrichtung basiert darauf, dass in jeder Loop k des ersten Reglers (Druckreglers) ein für diesen Abtastzeitpunkt angeforderter Solldruck $P_{Sys,Soll}$(k) zunächst mit Hilfe der vorgegebenen Kennlinie 30 zwischen Druck $P_{Sys}$ und Aktuatorposition $X_{Akt}$ (d.h. einer durch eine Bremsenkennlinie definierten Funktion) in eine entsprechende Aktuatorsollposition $X_{Akt,Soll}$(k) umgerechnet wird (Block 46 in Fig. 4). Die Aktuatorsollposition $X_{Akt,Soll}$(k) wird dann einer Anstiegsbegrenzungsfunktion zugeführt.

Zur Minimierung von Störeinflüssen bei der Berechnung der Vorsteuerdrehzahl $\omega_{Akt,Soll,DR,FFW,1}$ (d.h. des zweiten Aktuatorgeschwindigkeit-Sollwerts) wird beispielsgemäß das Signal für die angeforderten Solldrücke $P_{Sys,Soll}$ zuvor in Block 42 tiefpassgefiltert.

Die Anstiegsbegrenzungsfunktion 41 begrenzt den Verlauf der errechneten Aktuatorsollposition $X_{Akt,Soll}$(k) unter Berücksichtigung einer maximal einstellbaren Positionsänderung $\Delta X_{Max}$ pro Abtastzeit des Reglers 20 auf einen Wert $X_{Akt,Lim}$(k). Die maximal einstellbare Positionsänderung $\Delta X_{Max}$ ergibt sich z.B. aus der verfügbaren Aktuatordynamik.

Der begrenzte Wert $X_{Akt,Lim}$(k) kann optional (gestrichelt in Fig. 4 dargestellt) ausgegeben werden und so an anderer Stelle verwendet werden. Eine Verwendung von $X_{Akt,Lim}$(k) in der übrigen Regelvorrichtung der Fig. 2 ist nicht notwendig.

Beispielsgemäß wird in der Anstiegsbegrenzungsfunktion 41 die Änderung $\Delta X$(k) des Aktuatorposition-Sollwerts $X_{Akt,Soll}$, welche in Block 41a aus der Differenz der Aktuatorposition-Sollwerte des aktuellen Zeitschritts k und des vorherigen Zeitschritts k-1 gebildet wird, in Block 41b auf eine maximale Positionsänderung ($\Delta X_{Max}$, $\Delta X_{Min}$) begrenzt. Die begrenzte Änderung wird mit $\Delta X_{Lim}(k)$ bezeichnet.

Der Wert für die maximale Positionsänderung $\Delta X_{Max}$ pro Reglerloop wird vorteilhafterweise aus dem Wert für die minimal bzw. maximal zulässige Aktuatorsollgeschwindigkeit bzw.-drehzahl $\omega_{Min}$, $\omega_{Max}$ (siehe Fig. 2) sowie ggf. unter Berücksichtigung des Getriebes 2 des Aktuators und der Abtastzeit $T_0$, mit der der Druckregler 20 arbeitet, bestimmt.

Der im Rahmen der Anstiegsbegrenzungsfunktion 41 ermittelte Wert für die Änderung der Aktuatorsollposition $\Delta X_{Lim}(k)$ stellt die für den vorliegenden Abtastschritt anzufordernde Änderung der Aktuatorposition dar und wird daher beispielsgemäß zur Berechnung der Geschwindigkeitsvorsteuerung $\omega_{Akt,Soll,DR,FFW,1}$ verwendet.

In Block 43 wird aus dem ermittelten Wert für die Änderung der Aktuatorsollposition $\Delta X_{Lim}(k)$ die dem Wert $\Delta X_{Lim}(k)$ entsprechende Aktuatorgeschwindigkeit bzw. Motordrehzahl (sog. erste Aktuatorgeschwindigkeit) $\omega_{Lim}$ bestimmt.

Alternativ (nicht in Fig. 4 dargestellt) kann auch die anstiegsbegrenzte Aktuatorposition $X_{Akt,Lim}(k)$ zur Berechnung der ersten Aktuatorgeschwindigkeit (Motordrehzahl) $\omega_{Lim}$ herangezogen werden, z.B. indem die Aktuatorposition $X_{Akt,Lim}(k)$ differenziert wird.

Mittels eines Skalierungsfaktors $\lambda_{FFW}$, der z.B. Werte zwischen 0 und 1 annehmen kann, erfolgt beispielsgemäß eine Gewichtung der Geschwindigkeitsvorsteuerung in Block 44. Dies legt fest, wie stark die Geschwindigkeitsvorsteuerung in den Druckregler 20 eingreift bzw. wie stark die Geschwindigkeitsvorsteuerung den Druckregler bei seiner Regelaufgabe unterstützt. Hierbei bedeutet ein Skalierungsfaktor $\lambda_{FFW} = 1$, dass die Aktuatorgeschwindigkeitsaufschaltung zu 100% vorgenommen wird. Beispielsgemäß wird die erste Aktuatorgeschwindigkeit $\omega_{Lim}$ mit dem Skalierungsfaktors $\lambda_{FFW}$ multipliziert.

Vorteilhafterweise ist eine Drehzahlbegrenzungsfunktion ($\omega_{Min,FFW}$, $\omega_{Max,FFW}$) in Block 45 vorgesehen, welche eine für jede Drehrichtung unterschiedliche Begrenzung des Signals ermöglicht. Das bedeutet z.B., dass der Betrag von $\omega_{Max,FFW}$ ungleich dem Betrag von $\omega_{Min,FFW}$ sein kann. Hierdurch kann erreicht werden, dass bei einem angeforderten Druckaufbau, insbesondere zur Unterstützung der schnellen Lüftspielüberwindung, sehr große Werte für die Geschwindigkeitsvorsteuerung zugelassen werden können, während für den Druckabbau kleinere Maximalwerte ausreichend sind. Hierbei gilt beispielsgemäß, dass

$$0 \; < \; \omega_{Max,FFW} \; \leq \; \omega_{Max}$$

und

$$\omega_{Min} \; = \; -\omega_{Max} \; \leq \; \omega_{Min,FFW} \; < \; 0$$

ist.

Prinzipiell ist die Drehzahlbegrenzungsfunktion des Blocks 45 ($\omega_{Min,FFW}$, $\omega_{Max,FFW}$) unabhängig von der Drehzahlbegrenzungsfunktion des Blocks 24 ($\omega_{Min}$, $\omega_{Max}$).

Beispielsgemäß wird die mit dem Skalierungsfaktor multiplizierte Aktuatorgeschwindigkeit $\lambda_{FFW}{}^{*}\omega_{Lim}$ (sog. zweite Aktuatorgeschwindigkeit) drehzahlbegrenzt.

Ausgangsgröße der Drehzahlbegrenzungsfunktion 45 und damit des beispielsgemäßen Funktionsblockes "Berechnung der Geschwindigkeitsvorsteuerung" ist der zweite Aktuatorgeschwindigkeits-Sollwert $\omega_{Akt,Soll,DR,FFW,1}$ (k) (Wert für die Solldrehzahl im Vorsteuerzweig des Druckreglers 20), welcher als zusätzlicher Anteil (anstelle des in Fig. 2 dargestellten Signals $\omega_{Akt,Soll,DR,FFW}$) dem ersten Aktuatorgeschwindigkeits-Sollwert $\omega_{Akt,Soll,DR,Ctrl}$ (Solldrehzahl des Reglers 20) überlagert wird.

Das beispielsgemäße Verfahren ist robust gegenüber Parameterschwankungen in der den Berechnungen zugrunde liegenden, die Bremsanlage charakterisierende Kennlinie 30, da zwar eine Umrechnung von angeforderten Drücken in Aktuatorpositionen vorgenommen wird, allerdings für die eigentliche Ermittlung der Geschwindigkeitsvorsteuerung lediglich die Änderungen der Aktuatorpositionen berücksichtigt werden. Eine durch Parameteränderungen mögliche, zu starke Vorsteuerung kann darüber hinaus durch eine geeignete Definition/Wahl des Skalierungsfaktors $\lambda_{FFW}$ vermieden werden, indem auf eine 100%-ige Gewichtung verzichtet wird und stattdessen ein kleinerer Faktor gewählt wird.

Im Falle eines elektromechanischen Aktuators einer elektromechanisch betätigbaren Bremse wird in Fig. 4 die (Zuspann) Kraft F anstelle des Druckes $P_{Sys}$ herangezogen und anstelle der Druck-Weg-Kennlinie 30 in Block 46 eine Kennlinie 40 vorgegeben, welche den Zusammenhang zwischen der (Zuspann)Kraft F und der Aktuatorposition $X_{Akt}$ beschreibt.

Die Erfindung bietet den Vorteil eines Regelungskonzepts zur verbesserten Einstellung von vorgegebenen Systemdrücken/(Zuspann)Kräften und zur Erhöhung der Kurventreue bei angeforderten Bremsdruckverläufen/(Zuspann)Kraft-Verläufen mittels eines elektromotorisch angetriebenen Aktuators in einem Bremssystem unter Berücksichtigung des nichtlinearen Verhaltens der Bremsencharakteristik. Im Rahmen der verfügbaren Aktuatordynamik ist somit der zeitliche Verzug zwischen dem Verlauf der gestellten Druck-/Kraftanforderung und dem sich einstellenden Druck bzw. der sich einstellenden (Zuspann)Kraft möglichst gering.

Ein weiterer Vorteil der Erfindung ist es, dass ein möglichst schnelles Überwinden des Bremsbelaglüftspiels sichergestellt wird, so dass die Zeit zwischen dem Stellen einer Druck-/Kraftanforderung und dem Beginn des Druck-/Kraftaufbaus in der oder den beaufschlagten Radbremsen möglichst kurz ist. Dies ist insbesondere dann von Bedeutung, wenn zur Reduzierung des Restbremsmomentes bei gelöster Radbremse das eingestellte Lüftspiel relativ groß ist.

**Patentansprüche**

1. Verfahren zur Regelung eines elektromechanischen Aktuators (1, 2) einer Bremsanlage für Kraftfahrzeuge, bei welchem ein, insbesondere gemessener, Istwert einer Regelgröße ($P_{Sys,Ist}$, $F_{Ist}$) auf einen vorgegebenen Sollwert ($P_{Sys,Soll}$, $F_{Soll}$) eingestellt werden soll, wobei anhand des Sollwerts ($P_{Sys,Soll}$, $F_{Soll}$) und des Istwerts ($P_{Sys,Ist}$, $F_{Ist}$) mittels eines ersten Reglers (19, 20) ein erster Aktuatorgeschwindigkeit-Sollwert ($\omega_{Akt,Soll,DR,Ctrl}$) ermittelt wird, und wobei anhand des ersten Aktuatorgeschwindigkeit-Sollwerts und eines zweiten Aktuatorgeschwindigkeit-Sollwerts ($\omega_{Akt,Soll,DR,FFW,1}$) zur Geschwindigkeitsvorsteuerung (220) eine Stellgröße ($\omega_{Akt,Soll}$, $M_{Akt,Soll}$) für den elektromechanischen Aktuator (1, 2) bestimmt wird, **dadurch gekennzeichnet, dass** der zweite Aktuatorgeschwindigkeit-Sollwert ($\omega_{Akt,Soll,DR,FFW,1}$) anhand des Sollwerts und eines vorgegebenen Zusammenhangs (30, 40) zwischen der Regelgröße ($P_{Sys}$, F) und einer zu einer Position des elektromechanischen Aktuators korrespondierenden Größe ($X_{Akt}$) ermittelt wird.

2. Verfahren nach Anspruch 1, **dadurch gekennzeichnet, dass** anhand des ersten und des zweiten Aktuatorgeschwindigkeit-Sollwerts ($\omega_{Akt,Soll,DR,Ctrl}$, $\omega_{Akt,Soll,DR,FFW,1}$), insbesondere durch Addition (23), ein dritter Aktuatorgeschwindigkeit-Sollwert ($\omega_{Akt,Soll}$) bestimmt wird, welcher insbesondere als Eingangsgröße einem zweiten Regler (25, 21), insbesondere einem Geschwindigkeitsregler, zugeführt wird.

3. Verfahren nach Anspruch 1 oder 2, **dadurch gekennzeichnet, dass** aus dem Sollwert mittels des vorgegebenen Zusammenhangs (30, 40) ein Aktuatorposition-Sollwert ($X_{Akt,Soll}$) ermittelt wird (46).

4. Verfahren nach Anspruch 3, **dadurch gekennzeichnet, dass** der Sollwert gefiltert wird (42) und der gefilterte Sollwert zur Ermittlung des Aktuatorposition-Sollwerts ($X_{Akt,Soll}$) benutzt wird.

5. Verfahren nach Anspruch 3 oder 4, **dadurch gekennzeichnet, dass** aus dem Aktuatorposition-Sollwert ($X_{Akt,Soll}$) der zweite Aktuatorgeschwindigkeit-Sollwert ($\omega_{Akt,Soll,DR,FFW,1}$) ermittelt wird (46, 41, 43, 44, 45).

6. Verfahren nach einem der Ansprüche 3 bis 5, **dadurch gekennzeichnet, dass** eine Anstiegsbegrenzung ($X_{Akt,Lim}$) des ermittelten Aktuatorposition-Sollwerts ($X_{Akt,Soll}$) durchgeführt wird (41, 41a, 41b), insbesondere durch eine Begrenzung ($\Delta X_{Lim}$, 41b) einer Änderung ($\Delta X$) des Aktuatorposition-Sollwerts ($X_{Akt,Soll}$) auf eine maximale Positionsänderung ($\Delta X_{Max}$) pro einer Abtastzeit des ersten Reglers.

7. Verfahren nach Anspruch 6, **dadurch gekennzeichnet, dass** anhand des begrenzten Aktuatorposition-Sollwerts ($X_{Akt,Lim}$) oder der begrenzten Änderung ($\Delta X_{Lim}$) des Aktuatorposition-Sollwerts eine erste Aktuatorgeschwindigkeit ($\omega_{Lim}$) ermittelt wird (43).

8. Verfahren nach Anspruch 7, **dadurch gekennzeichnet, dass** die erste Aktuatorgeschwindigkeit ($\omega_{Lim}$) durch Multiplikation mit einem Skalierungsfaktor ($\lambda_{FFW}$) gewichtet wird (44).

9. Verfahren nach Anspruch 7 oder 8, **dadurch gekennzeichnet, dass** eine Geschwindigkeitsbegrenzung (45) der, insbesondere gewichteten, ersten Aktuatorgeschwindigkeit ($\omega_{Lim}$) durchgeführt wird, wobei insbesondere die Geschwindigkeitsbegrenzung in Abhängigkeit der Drehrichtung des Aktuators durchgeführt wird.

10. Verfahren nach einem der Ansprüche 6 bis 9, **dadurch gekennzeichnet, dass** anhand des begrenzten Aktuatorposition-Sollwerts ($X_{Akt,Lim}$) oder der begrenzten Änderung ($\Delta X_{Lim}$) des Aktuatorposition-Sollwerts oder der ermittelten ersten Aktuatorgeschwindigkeit ($\omega_{Lim}$) der zweite Aktuatorgeschwindigkeit-Sollwert ($\omega_{Akt,Soll,DR,FFW,1}$) ermittelt wird.

11. Regelvorrichtung für einen elektromechanischen Aktuator (1, 2) einer Bremsanlage für Kraftfahrzeuge, mittels welcher ein, insbesondere gemessener, Istwert einer Regelgröße ($P_{Sys,Ist}$, $F_{Ist}$) auf einen vorgegebenen Sollwert ($P_{Sys,Soll}$, $F_{Soll}$) eingestellt wird und welche einen ersten Regler (19, 20), dem der vorgegebene Sollwert und der Istwert als Eingangsgrößen zugeführt werden, und einen dem ersten Regler nachgeschalteten zweiten Regler (25, 21), insbesondere Geschwindigkeitsregler, umfasst, wobei aus einem mittels des ersten Reglers bestimmten, ersten Aktuatorgeschwindigkeit-Sollwert ($\omega_{Akt,Soll,DR,Ctrl}$) und einem zweiten Aktuatorgeschwindigkeit-Sollwert ($\omega_{Akt,Soll,DR,FFW,1}$) zur Geschwindigkeitsvorsteuerung, insbesondere durch Addition (23), ein dritter Aktuatorgeschwindigkeit-Sollwert ($\omega_{Akt,Soll}$) bestimmt wird, **dadurch gekenn-**

**zeichnet, dass** der zweite Aktuatorgeschwindigkeit-Sollwert ($\omega_{Akt,Soll,DR,FFW,1}$) anhand des Sollwerts ($P_{Sys,Soll}$, $F_{Soll}$) und eines vorgegebenen Zusammenhangs (30, 40) zwischen der Regelgröße ($P_{Sys}$, F) und einer zu einer Position des elektromechanischen Aktuators korrespondierenden Größe ($X_{Akt}$) bestimmt wird (46, 41, 43, 44, 45).

12. Regelvorrichtung nach Anspruch 11, **dadurch gekennzeichnet, dass** ein Mittel (42, 46) zur Berechnung eines Aktuatorposition-Sollwerts ($X_{Akt,Soll}$) aus dem Sollwert ($P_{Sys,Soll}$, $F_{Soll}$) mittels des vorgegebenen Zusammenhangs (30, 40) vorgesehen ist, und dass insbesondere ein Mittel (41, 43, 44 45) zur Bestimmung des zweiten Aktuatorgeschwindigkeit-Sollwerts ($\omega_{Akt,Soll,DR,FFW,1}$) aus dem Aktuatorposition-Sollwerts ($X_{Akt,Soll}$) vorgesehen ist.

13. Regelvorrichtung nach Anspruch 12, **dadurch gekennzeichnet, dass** ein Mittel (41, 41a, 41b) zur Anstiegsbegrenzung des ermittelten Aktuatorposition-Sollwerts ($X_{Akt,Soll}$), insbesondere ein Mittel (41b) zur Begrenzung einer Änderung ($\Delta X$) des Aktuatorposition-Sollwerts ($X_{Akt,Soll}$) auf eine maximale Positionsänderung ($\Delta X_{Max}$) pro einer Abtastzeit des ersten Reglers, vorgesehen ist.

14. Regelvorrichtung nach Anspruch 13, **dadurch gekennzeichnet, dass** ein Mittel (43) zur Berechnung einer ersten Aktuatorgeschwindigkeit ($\omega_{Lim}$) aus dem begrenzten Aktuatorposition-Sollwert ($X_{Akt,Lim}$) oder aus der begrenzten Änderung ($\Delta X_{Lim}$) des Aktuatorposition-Sollwerts vorgesehen ist.

15. Regelvorrichtung nach Anspruch 14, **dadurch gekennzeichnet, dass** ein Mittel (44) zur Multiplikation der ersten Aktuatorgeschwindigkeit ($\omega_{Lim}$) mit einem Skalierungsfaktor ($\lambda_{FFW}$) vorhanden ist und/oder dass ein Mittel (45) zur Begrenzung der ersten Aktuatorgeschwindigkeit ($\omega_{Lim}$) vorgesehen ist.

**Claims**

1. Method for controlling an electromechanical actuator (1, 2) of a brake system for motor vehicles, according to which method an actual value, in particular a measured actual value, of a controlled variable ($P_{Sys,Ist}$, $F_{Ist}$) is intended to be set to a specified setpoint value ($P_{Sys,Soll}$, $F_{Soll}$), wherein a first actuator speed setpoint value ($\omega_{Akt,Soll,DR,Ctrl}$) is determined on the basis of the setpoint value ($P_{Sys,Soll}$, $F_{Soll}$) and the actual value ($P_{Sys,Ist}$, $F_{Ist}$) by means of a first controller (19, 20), and wherein a manipulated variable ($\omega_{Akt,Soll}$, $M_{Akt,Soll}$) for the electromechanical actuator (1, 2) is determined on the basis of the first actuator speed setpoint value and a second actuator speed setpoint value ($\omega_{Akt,Soll,DR,FFW,1}$) for speed precontrol (220), **characterized in that** the second actuator speed setpoint value ($\omega_{Akt,Soll,DR,FFW,1}$) is determined on the basis of the setpoint value and a specified relationship (30, 40) between the controlled variable ($P_{Sys}$, F) and a variable ($X_{Akt}$) corresponding to a position of the electromechanical actuator.

2. Method according to Claim 1, **characterized in that** a third actuator speed value ($\omega_{Akt,Soll}$) is determined on the basis of the first and the second actuator speed setpoint value ($\omega_{Akt,Soll,DR,Ctrl}$, $\omega_{Akt,Soll,DR,FFW,1}$), in particular via addition (23), which third actuator speed setpoint value is fed, in particular as an input variable, to a second controller (25, 21), in particular to a speed controller.

3. Method according to Claim 1 or 2, **characterized in that** an actuator position setpoint value ($X_{Akt,Soll}$) is determined (46) from the setpoint value by means of the specified relationship (30, 40).

4. Method according to Claim 3, **characterized in that** the setpoint value is filtered (42) and the filtered setpoint value is used for determining the actuator position setpoint value ($X_{Akt,Soll}$).

5. Method according to Claim 3 or 4, **characterized in that** the second actuator speed setpoint value ($\omega_{Akt,Soll,DR,FFW,1}$) is determined (46, 41, 43, 44, 45) from the actuator position setpoint value ($X_{Akt,Soll}$).

6. Method according to any one of Claims 3 to 5, **characterized in that** an increase limitation ($X_{Akt,Lim}$) of the determined actuator position setpoint value ($X_{Akt,Soll}$) is carried out (41, 41a, 41b), in particular by a limitation ($\Delta X_{Lim}$, 41b) of a change ($\Delta X$) in the actuator position setpoint values ($X_{Akt,Soll}$) to a maximum position change ($\Delta X_{Max}$) per one sampling time of the first controller.

7. Method according to Claim 6, **characterized in that** a first actuator speed ($\omega_{Lim}$) is determined (43) on the basis of the limited actuator position setpoint value ($X_{Akt,Lim}$) or the limited change ($\Delta X_{Lim}$) in the actuator position setpoint value.

8. Method according to Claim 7, **characterized in that** the first actuator speed ($\omega_{Lim}$) is weighted (44) by multiplication with a scaling factor ($\lambda_{FFW}$).

9. Method according to Claim 7 or 8, **characterized in that** a speed limitation (45) of the, in particular weighted, first actuator speed ($\omega_{Lim}$) is carried out, wherein, in particular, the speed limitation is carried out as a function of the direction of rotation of the actuator.

**10.** Method according to any one of Claims 6 to 9, **characterized in that** the second actuator speed setpoint value ($\omega_{Akt,Soll,DR,FFW,\,1}$) is determined on the basis of the limited actuator position setpoint value ($X_{Akt,\,Lim}$) or the limited change ($\Delta X_{Lim}$) in the actuator position setpoint value or the determined first actuator speed ($\omega_{Lim}$) of the second actuator speed setpoint value.

**11.** Control device for an electromechanical actuator (1, 2) of a brake system for motor vehicles, by means of which an actual value, in particular a measured actual value, of a controlled variable ($P_{Sys,Ist}$, $F_{Ist}$) is intended to be set to a specified setpoint value ($P_{Sys,Soll}$, $F_{Soll}$), and which comprises a first controller (19, 20), to which the specified setpoint value and the actual value, as input variables, are fed, a second controller (25, 21), in particular a speed controller, connected downstream of the first controller, wherein a third actuator speed setpoint value ($\omega_{Akt,Soll}$) is determined from a first actuator speed setpoint value ($\omega_{Akt,Soll,DR,Ctrl}$), which is determined by means of the first controller, and a second actuator speed setpoint value ($\omega_{Akt,Soll,\,DR,FFW,\,1}$) for speed precontrol, in particular by addition (23), **characterized in that** the second actuator speed setpoint value ($\omega_{Akt,Soll,DR,FW,\,1}$) is determined (46, 41, 43, 44, 45) on the basis of the setpoint value ($P_{Sys,Soll}$, $F_{Soll}$) and a specified relationship (30, 40) between the controlled variable ($P_{Sys}$, F) and a variable ($X_{Akt}$) corresponding to a position of the electromechanical actuator.

**12.** Control device according to Claim 11, **characterized in that** a means (42, 46) for calculating an actuator position setpoint value ($X_{Akt,Soll}$) from the setpoint value ($P_{Sys,Soll}$, $F_{Soll}$) by means of the specified relationship (30, 40) is provided, and, in particular, a means (41, 43, 44 45) for determining the second actuator speed setpoint value ($\omega_{Akt,Soll,DR,FFW,\,1}$) from the actuator position setpoint value ($X_{Akt,Soll}$) is provided.

**13.** Control device according to Claim 12, **characterized in that** a means (41, 41a, 41b) for the increase limitation of the determined actuator position setpoint value ($X_{Akt,Soll}$), in particular a means (41b) for limiting a change ($\Delta X$) in the actuator position setpoint value ($X_{Akt,Soll}$) to a maximum position change ($\Delta X_{Max}$) per one sampling time of the first controller, is provided.

**14.** Control device according to Claim 13, **characterized in that** a means (43) for calculating a first actuator speed ($\omega_{Lim}$) from the limited actuator position setpoint value ($X_{Akt,Lim}$) or from the limited change ($\Delta X_{Lim}$) in the actuator position setpoint value is provided.

**15.** Control device according to Claim 14, **characterized in that** a means (44) for multiplying the first actuator speed ($\omega_{Lim}$) with a scaling factor ($\lambda_{FFW}$) is provided and/or a means (45) for limiting the first actuator speed ($\omega_{Lim}$) is provided.

**Revendications**

**1.** Procédé de régulation d'un actionneur électromécanique (1, 2) d'un système de freinage de véhicules automobile, procédé dans lequel une valeur réelle, notamment mesurée, d'une grandeur de régulation ($P_{Sys,Réel}$, $F_{Réel}$) doit être réglée à une valeur de consigne prédéterminée ($P_{Sys,Consigne}$, $F_{Consigne}$), une première valeur de consigne de vitesse d'actionneur ($\omega_{Act,Consigne,DR,Ctrl}$) étant déterminée sur la base de la valeur de consigne ($P_{Sys,Consigne}$, $F_{Consigne}$) et de la valeur réelle ($P_{Sys,Réel}$, $F_{Réel}$) au moyen d'un premier régulateur (19, 20), et une grandeur de réglage ($\omega_{Act,Consigne}$, $M_{Act,Consigne}$) de l'actionneur électromécanique (1, 2) étant déterminée sur la base de la première valeur de consigne de vitesse d'actionneur et d'une deuxième valeur de consigne de vitesse d'actionneur ($\omega_{Act,Consigne,DR,FFW,1}$) pour effectuer une précommande de vitesse (220), **caractérisé en ce que** la deuxième valeur de consigne de vitesse d'actionneur ($\omega_{Act,Consigne,DR,FFW,1}$) est déterminée sur la base de la valeur de consigne et d'une relation prédéterminée (30, 40) entre la grandeur de régulation ($P_{Sys}$, F) et une grandeur ($X_{Act}$) correspondant à une position de l'actionneur électromécanique.

**2.** Procédé selon la revendication 1, **caractérisé en ce qu'**une troisième valeur de consigne de vitesse d'actionneur ($\omega_{Act,Consigne}$) est déterminée sur la base des première et deuxième valeurs de consigne de vitesse d'actionneur ($\omega_{Act,Consigne,DR,Ctrl}$, $\omega_{Act,Consigne,DR,FFW,1}$), en particulier par addition (23), et est amenée en particulier en tant que grandeur d'entrée à un deuxième régulateur (25, 21), en particulier à un régulateur de vitesse.

**3.** Procédé selon la revendication 1 ou 2, **caractérisé en ce qu'**une valeur de consigne de position d'actionneur ($X_{Act,Consigne}$) est déterminée (46) à partir de la valeur de consigne au moyen de la relation prédéterminée (30, 40).

**4.** Procédé selon la revendication 3, **caractérisé en ce que** la valeur de consigne est filtrée (42) et la valeur de consigne filtrée est utilisée pour déterminer la valeur de consigne de position d'actionneur ($X_{Act,Consigne}$).

**5.** Procédé selon la revendication 3 ou 4, **caractérisé en ce que** la deuxième valeur de consigne de vitesse d'actionneur ($\omega_{Act,Consigne,DR,FFW,1}$) est déterminée (46, 41, 43, 44, 45) à partir de la valeur de consigne de position d'actionneur ($X_{Act,Consigne}$).

6. Procédé selon l'une des revendications 3 à 5, **caractérisé en ce qu'**une limite ($X_{Act, Lim}$) d'augmentation de la valeur de consigne de position d'actionneur déterminée ($X_{Act,Consigne}$) est effectuée (41, 41a, 41b), notamment par une limitation ($\Delta X_{Lim}$, 41b) d'une variation ($\Delta X$) de la valeur de consigne de position d'actionneur ($X_{Act,Consigne}$) à une variation de position maximum ($\Delta X_{Max}$) par période de balayage du premier régulateur.

7. Procédé selon la revendication 6, **caractérisé en ce qu'**une première vitesse d'actionneur ($\omega_{Lim}$) est déterminée (43) sur la base de la valeur de consigne de position d'actionneur limitée ($X_{Act,Lim}$) ou de la variation limitée ($\Delta X_{Lim}$) de la valeur de consigne de position d'actionneur.

8. Procédé selon la revendication 7, **caractérisé en ce que** la première vitesse d'actionneur ($\omega_{Lim}$) est pondérée (44) par multiplication par un facteur de mise à l'échelle ($\lambda_{FFW}$).

9. Procédé selon la revendication 7 ou 8, **caractérisé en ce qu'**une limitation de vitesse (45) de la première vitesse d'actionneur ($\omega_{Lim}$), en particulier pondérée, est effectuée, en particulier la limitation de vitesse étant effectuée en fonction du sens de rotation de l'actionneur.

10. Procédé selon l'une des revendications 6 à 9, **caractérisé en ce que** la deuxième valeur de consigne de vitesse d'actionneur ($\omega_{Act,Consigne,DR,FFW,1}$) est déterminée sur la base de la valeur de consigne de position d'actionneur limitée ($X_{Act,Lim}$) ou de la variation limitée ($\Delta X_{Lim}$) de la valeur de consigne de position d'actionneur ou de la première vitesse d'actionneur déterminée ($\omega_{Lim}$).

11. Dispositif de régulation d'un actionneur électromécanique (1, 2) d'un système de freinage de véhicules automobiles, dispositif au moyen duquel une valeur réelle, en particulier mesurée, d'une grandeur de régulation ($P_{Sys,Réel}$, $F_{Réel}$) est réglée sur une valeur de consigne prédéterminée ($P_{Sys,Consigne}$, $F_{Consigne}$), et lequel dispositif comprend un premier régulateur (19, 20), auquel la valeur de consigne prédéterminée et la valeur réelle sont amenées en tant que grandeurs d'entrée, et un deuxième régulateur (25, 21), en particulier un régulateur de vitesse, monté en aval du premier régulateur, une troisième valeur de consigne de vitesse d'actionneur ($\omega_{Act,Consigne}$) étant déterminée à partir d'une première valeur de consigne de vitesse d'actionneur ($\omega_{Act,Consigne,DR,Ctrl}$), déterminée au moyen du premier régulateur, et d'une deuxième valeur de consigne de vitesse d'actionneur ($\omega_{Act,Consigne,DR,FFW,1}$), pour effectuer une précommande de vitesse, en particulier par addition (23), **caractérisé en ce que** la deuxième valeur de consigne de vitesse d'actionneur ($\omega_{Act,Consigne,DR,FFW,1}$) est déterminée (46, 41, 43, 44, 45) sur la base de la valeur de consigne ($P_{Sys,Consigne}$, $F_{Consigne}$) et d'une relation prédéterminée (30, 40) entre la grandeur de régulation ($P_{Sys}$, $F$) et une grandeur ($X_{Act}$) correspondant à une position de l'actionneur électromécanique.

12. Dispositif de régulation selon la revendication 11, **caractérisé en ce qu'**un moyen (42, 46) est prévu pour calculer une valeur de consigne de position d'actionneur ($X_{Act,Consigne}$) à partir de la valeur de consigne ($P_{Sys,Consigne}$, $F_{Consigne}$) au moyen de la relation prédéterminée (30, 40) et **en ce qu'**en particulier un moyen (41, 43, 44, 45) est prévu pour déterminer la deuxième valeur de consigne de vitesse d'actionneur ($\omega_{Act,Consigne,DR,FFW,1}$) à partir de la valeur de consigne de position d'actionneur ($X_{Act,Consigne}$).

13. Dispositif de régulation selon la revendication 12, **caractérisé en ce qu'**un moyen (41, 41a, 41b) est prévu pour limiter l'augmentation de la valeur de consigne de position d'actionneur déterminée ($X_{Act,Consigne}$), en particulier un moyen (41b) est prévu pour limiter une variation ($\Delta X$) de la valeur de consigne de position d'actionneur ($X_{Act,Consigne}$) à une variation de position maximale ($\Delta X_{Max}$) par période de balayage du premier régulateur.

14. Dispositif de régulation selon la revendication 13, **caractérisé en ce qu'**un moyen (43) est prévu pour calculer une première vitesse d'actionneur ($\omega_{Lim}$) à partir de la valeur de consigne de position d'actionneur limitée ($X_{Act,Lim}$) ou à partir de la variation limitée ($A X_{Lim}$) de la valeur de consigne de position d'actionneur.

15. Dispositif de régulation selon la revendication 14, **caractérisé en ce qu'**un moyen (44) est prévu pour multiplier la première vitesse d'actionneur ($\omega_{Lim}$) par un facteur de mise à l'échelle ($\lambda_{FFW}$) et/ou **en ce qu'**un moyen (45) est prévu pour limiter la première vitesse d'actionneur ($\omega_{Lim}$).

Fig. 1

EP 3 003 803 B1

Fig. 2

**Fig. 3**

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2011154275 A1
- EP 1611365 B1
- DE 102012200494 A1
- WO 2011154369 A1
- WO 2008025797 A1
- DE 102009054985